(19) Europäisches Patentamt
European Patent Office
Office européen des brevets

(11) **EP 2 808 216 A1**

(12) **EUROPEAN PATENT APPLICATION**
published in accordance with Art. 153(4) EPC

(43) Date of publication:
**03.12.2014 Bulletin 2014/49**

(51) Int Cl.:
**B60W 10/06** (2006.01)   **B60K 6/445** (2007.10)
**B60W 10/08** (2006.01)   **B60W 20/00** (2006.01)
**F02D 29/02** (2006.01)

(21) Application number: **12866847.2**

(22) Date of filing: **27.01.2012**

(86) International application number:
**PCT/JP2012/051761**

(87) International publication number:
**WO 2013/111313 (01.08.2013 Gazette 2013/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **TOYOTA JIDOSHA KABUSHIKI KAISHA**
**Toyota-shi, Aichi-ken, 471-8571 (JP)**

(72) Inventor: **TERAYA, Ryuta**
**Toyota-shi, Aichi-ken, 471-8571 (JP)**

(74) Representative: **Kuhnen & Wacker**
**Patent- und Rechtsanwaltsbüro**
**Prinz-Ludwig-Straße 40A**
**85354 Freising (DE)**

(54) **HYBRID VEHICLE CONTROL APPARATUS**

(57)    The hybrid vehicle control device of the invention suppresses the decrease of the output torque and the increase of the fuel consumption when the engine operation is started as possible in case that the temperature of the engine compartment is increased by the heat radiating from the engine and the like while the engine operation is stopped during the intermittent engine operation. The device performs an engine motoring without performing a fuel injection in the engine in case that the intake temperature increases when the engine operation is required to be started during the intermittent engine operation.

Fig. 4

# Description

## [TECHNICAL FIELD]

The invention relates to a hybrid vehicle control device, that is, a device for controlling a hybrid vehicle having an internal combustion engine and an electric motor.

## [BACKGROUND ART]

For the purpose of decreasing the fuel consumption, etc., various hybrid vehicles have been proposed, which operate the engine intermittently while the vehicle is driven (runs) (for example, refer to Unexamined JP Patent Publication Nos. 2006-256481, 2011-43089, etc.).

## [SUMMARY OF INVENTION]

In such a type of the hybrid vehicle, the temperature of the engine compartment may be increased by the heat radiating from the engine and the like while the engine operation is stopped during the intermittent engine operation. In this case, when the engine operation is started, the intake temperature becomes high and thereby, the decrease of the engine output torque and the increase of the fuel consumption occur. This invention solves these problems.

A hybrid vehicle, which the invention is applied (hereinafter, this vehicle will be simply referred to as "vehicle") has an internal combustion engine positioned in an engine compartment and an electric motor which can perform a motoring of the engine. A hybrid vehicle control device of the invention (hereinafter, this device will be simply referred to as "vehicle control device") is configured to control the vehicle so as to intermittently operate the engine while the vehicle is driven.

The invention is characterized in that the the vehicle control device has temperature acquisition means and engine motoring control means. The temperature acquisition means is adapted to acquire a temperature of the engine compartment. The engine motoring control means is adapted to perform the engine motoring without performing a fuel injection in the engine in case that the temperature is higher than or equal to a predetermined temperature when the engine operation is required to be started during the intermittent engine operation. It should be noted that the engine motoring control means may be adapted to perform the fuel injection in the engine without performing the engine motoring in case that the temperature is lower than the predetermined temperature when the engine operation is required to be started.

Further, the engine motoring control means may be adapted to terminate the engine motoring and perform the fuel injection in the engine in case that since the temperature is higher than or equal to the predetermined temperature when the engine operation is required to be started, the engine motoring is started and thereafter, the temperature becomes lower than the predetermined temperature (for example, in case that the temperature becomes lower than an engine motoring terminating judgment temperature which is lower than an engine motoring starting judgment temperature which is the predetermined temperature).

Another invention is characterized in that the vehicle control device has temperature acquisition means and engine motoring control means. The temperature acquisition means is adapted to acquire an intake temperature of the engine. The engine motoring control means is adapted to perform an engine motoring without performing a fuel injection in the engine in case that the intake temperature is higher than or equal to a predetermined temperature when the engine operation is required to be started during the intermittent engine operation. It should be noted that the engine motoring control means may be adapted to perform the fuel injection in the engine in case that the intake temperature is lower than the predetermined temperature when the engine operation is required to be started.

Further, the engine motoring control means may be adapted to terminate the engine motoring and perform the fuel injection in the engine in case that since the intake temperature is higher than or equal to the predetermined temperature when the engine operation is required to be started, the engine motoring is started and thereafter, the intake temperature becomes lower than the predetermined temperature (for example, in case that the intake temperature becomes lower than an engine motoring terminating judgment temperature which is lower than an engine motoring starting judgment temperature which is the predetermined temperature).

-Operation/Effect-

In the vehicle control device of the invention having the aforementioned configuration, the engine motoring is performed in case that the intake temperature becomes high by the increase of the temperature of the engine compartment while the engine operation is stopped during the intermittent engine operation. Thereby, the decrease of the output torque in the engine and the increase of the fuel consumption are suppressed sufficiently.

Of course, when a period of time has elapsed after the engine motoring is started, the temperature of the engine compartment decreases since the ambient air is introduced thereinto and thereby, the intake temperature also decreases. Thus, when the intake temperature decreases, the engine motoring is terminated and the engine operation is started (the fuel injection is started). Thereby, the engine operation is started successfully during the intermittent engine operation.

[BRIEF DESCRIPTION OF THE DRAWINGS]

[FIG.1] FIG.1 is a schematic view showing an overall configuration of a hybrid vehicle which an embodiment of the invention is applyed.
[FIG.2] FIG.2 is a block diagram showing a schematic functional configuration of the hybrid vehicle shown in FIG.1.
[FIG.3] FIG.3 is a schematic view showing in more detail the configuration of an electronic control unit and the engine shown in FIG.2.
[FIG.4] FIG.4 is a graph showing the time course of the engine speed Ne, the intake temperature Tia and the intake pipe negative pressure Pin.
[FIG.5] FIG.5 is a a graph showing the time course of the engine speed Ne, the intake temperature Tia and the intake pipe negative pressure Pin (a portion of the FIG.4 is enlarged along the time axis).

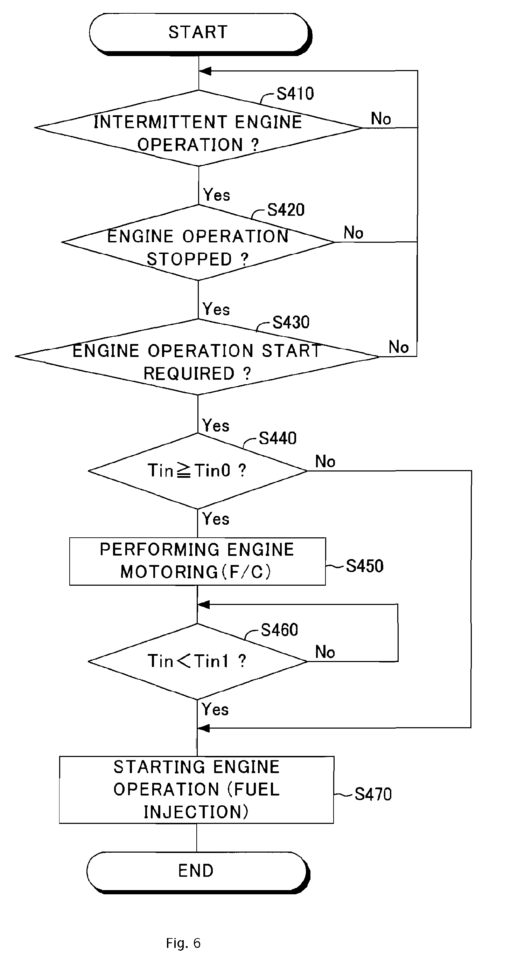

[FIG.6] FIG.6 is a flowchart showing the contents of a control performed according to the embodiment.

[MODE FOR CARRYING OUT THE INVENTION]

Hereinafter, embodiments of the present invention will be described with reference to the drawings. It should be noted that the description of the following embodiments is one which describes one example of the embodiment of the present invention in detail to the extent possible for meeting the description requirements of the specification which is required by law. Thus, as will be described later, it is quite natural that the invention is not limited to the specific configuration of the embodiment described below. Various modifications that can be applied to the embodiment (Modification: modification) impedes a consistent understanding of the description of embodiments when they are inserted in the description of the embodiment and therefore, they are collectively described at the end of the specification.

-Overall Configuration-

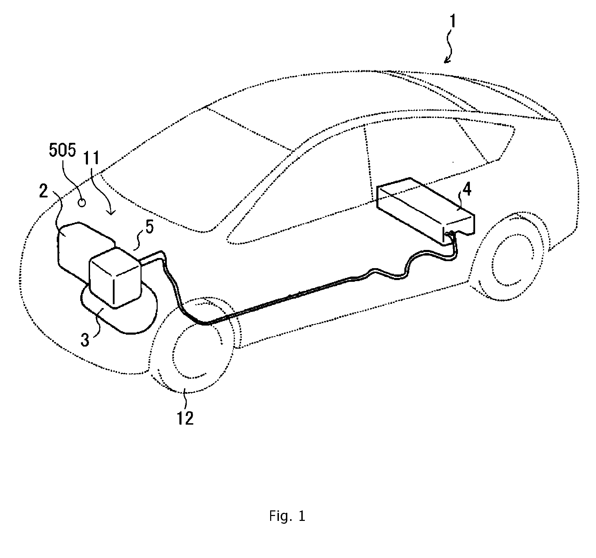

FIG.1 is a schematic diagram showing the overall configuration of a hybrid vehicle 1 which one embodiment of the invention is applied. Referring to FIG.1, a hybrid vehicle 1 (hereinafter, this will be simply referred to as "vehicle 1") includes an internal combustion engine 2, a hybrid transaxle 3, a battery 4, and a power control unit 5.
The engine 2 is a multi-cylinder internal combustion engine of the naturally aspirated type and is configured so as to output a power by receiving a supply of hydrocarbon fuel such as gasoline or light oil. The engine 2, the hybrid transaxle 3, and the power control unit 5 are mounted in an engine compartment 11 provided in the front portion of the vehicle 1. The vehicle 1 is configured to rotationally drive the wheels 12 by the driving force output from the engine 2 and/or the hybrid transaxle 3 and as needed, so as to collect an electric power from the rotational driving force of the wheels 12.

- Hybrid power transmission system -

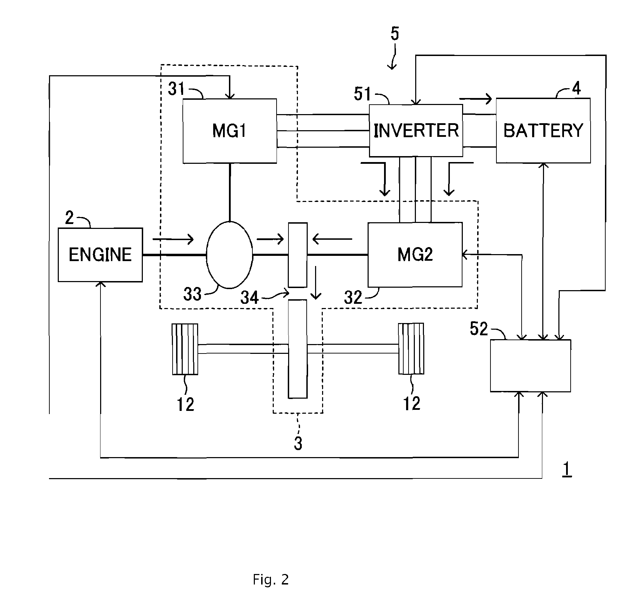

FIG 2 is a block diagram showing a schematic functional configuration of the vehicle 1 shown in FIG.1. Below, with reference to FIG.2, the hybrid transaxle 3 includes a first motor generator 31, a second motor generator 32, a power distribution mechanism 33, and a speed reducer 34.
The first motor generator 31 is a known AC synchronous motor generator which can operate as an electric generator as well as an electric motor, and is provided so as to generate an electric power by receiving all or part of the rotational driving force of the engine 2. That is, the first motor generator 31 is provided to be able to perform the motoring of the engine 2. It should be noted that according to this embodiment, the first motor generator 31 is provided so as to function as an electric generator mainly.
The second motor generator 32 is a known AC synchronous motor generator which can operate as an electric generator as well as an electric motor and is provided so as to generate an electric power for rotationally driving the wheels 12 by receiving the electric power from the battery 4 and/or the first motor generator 31 while collecting the electric power from the rotational driving force of the wheels 12 during the vehicle deceleration. That is, the second motor generator 32 is provided so as to be able to perform the motoring of the engine 2.
The first motor generator 31, the second motor generator 32, and the engine 2 are coupled to the wheels 12 via the power distribution mechanism 33 and the speed reducer 34. The power distribution mechanism 33 is configured to transmit all or part of the rotational driving force output by the engine 2 to enable the first motor generator 31 to generate the electric power, and output the rotational driving force output by the engine 2 and the second motor generator 32 to the speed reducer 34 so as to drive the wheels 12. Since the power transmission mechanism of the vehicle 1 is known, in this specification, a detailed description of such a mechanism will be omitted.
According to this embodiment, the battery 4 is a rechargeable lithium ion battery and electrically connected to the first and second motor generators 31 and 32 via an inverter 51 of the power control unit 5. The power control unit 5 includes the aforementioned inverter 51 and the electronic control unit 52 (hereinafter, this will be simply referred to as "ECU 52"). The inverter 51 is adapted to convert DC power supplied from the battery 4 to AC power and output it to the first and second motor generators 31 and 32 and to convert AC power supplied from the first and second motor generators 31 and 32 to DC power and output it to the battery 4.

-Engine-

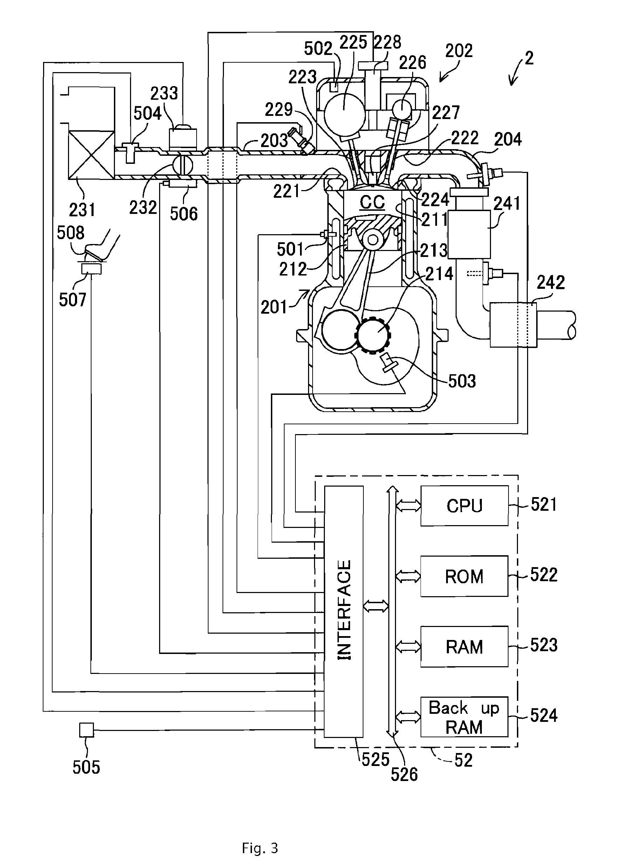

FIG.3 is a schematic diagram showing in more detail the configuration of the engine 2 and the ECU 52 shown in FIG.2. It should be noted that in FIG.3, it is assumed that the sectional view of the specific cylinder of the engine 2 taken along a plane perpendicular to the cylinder arrangement direction. Below, with reference to FIG.3, the engine 2 includes a cylinder block 201 and a cylinder head 202. These are fixed to each other by bolts or the like not shown. Further, an intake passage 203 and an exhaust passage 204 are connected to the engine 2 (in particular, to the cylinder block 201).

Cylinder bores 211, each of which is a through hole of a substantially cylindrical shape for forming the cylinder, are formed in the cylinder block 201. As described above, the plurality of the cylinder bores 211 are arranged in the cylinder block 201 in a row along the cylinder arrangement direction. A piston 212 is housed inside each cylinder bore 211 so as to be able to reciprocally move along the central axis of the cylinder bore 211 (hereinafter, this axis will be referred to as "cylinder central axis").

A crank shaft 213 is rotationally supported while being disposed parallel to the cylinder arrangement direction in the cylinder block 201. The crank shaft 213 is connected to the piston 212 via a connection rod 214 so as to being rotationally driven by the reciprocating movement of the piston 212 along the cylinder center axis.

The cylinder head 202 is connected to one end portion of the cylinder block 201 in the direction along the cylinder center axis (an end at the dead top center side of the piston 212 : the upper end portion of the figure). A plurality of recesses are provided on the end surface of the cylinder head 202 at the positions, each corresponding to the cylinder bore 211, on the side of the cylinder block 201. That is, a combustion chamber CC is formed by the space inside the cylinder bore 211 at the cylinder head 202 side of the top surface of the piston 212 (at the upper side in the figure) and the space inside the aforementioned recess under the state that the cylinder head 202 is coupled and fixed to the cylinder block 201.

Intake ports 221 and exhaust ports 222 are provided in the cylinder head 202 so as to communicate with the combustion chambers CC. The intake passage 203 including an intake manifold, a surge tank and the like are connected to the intake ports 221. Similarly, the exhaust passage 204 including an exhaust manifold is connected to the exhaust ports 222. Further, intake valves 223, exhaust valves 224, an intake valve control device 225, an exhaust cam shaft 226, spark plugs 227, igniters 228 and fuel injectors 229 are mounted on the cylinder head 202.

The intake valve 223 is one for opening and closing the intake port 221 (that is, for controlling the communication condition between the intake port 221 and the combustion chamber CC). The exhaust valve 224 is one for opening and closing the exhaust port 222 (that is, for controlling the communication condition between the exhaust port 222 and the combustion chamber CC). The intake valve control device 225 includes a mechanism for controlling the rotational angle (phase angle) of the intake cam and the intake cam shaft not shown (the specific configuration of this mechanism is known and therefore, the description thereof will be omitted in this specification). The exhaust cam shaft 226 is configured to drive the exhaust valve 224.

The spark plug 227 is provided such that a sparking electrode at the tip end thereof exposes to the interior of the combustion chamber CC. The igniter 228 includes an ignition coil for generating a high voltage to be supplied to the spark plug 227. The fuel injector 229 is configured and disposed so as to inject into the intake port 221, a fuel to be supplied to the combustion chamber CC.

A throttle valve 232 is mounted in the intake passage 203 at a position between an air filter 231 and the intake port 221. The throttle valve 232 is adapted to change the opening sectional area of the intake passage 203 by being rotationally driven by a throttle valve actuator 233.

Upstream and downstream catalyst converters 241 and 242 are mounted in the exhaust passage 204. The upstream catalyst converter 241 is an exhaust gas purification catalyst device, the exhaust gas discharged from the combustion chamber CC to the exhaust port 222 first flowing thereinto, and is provided upstream of the downstream catalyst converter 242 in the exhaust gas flowing direction. The upstream and downstream catalyst converters 241 and 242 each includes therein a three way catalyst having an oxygen absorption function and is configured to be able to simultaneously purify CO, an unburned fuel component such as HC and NOx in the exhaust gas.

-Control System-

The vehicle 1 is provided with various sensors such as a cooling water temperature sensor 501, a cam position sensor 502, a crank position sensor 503, an air flow meter 504, a throttle position sensor 506, an acceleration pedal opening degree sensor 507 and the like.

The cooling water sensor 501 is mounted on the cylinder block 201 and is adapted to output a signal corresponding to the temperature Tw of the cooling water in the cylinder block 201. The cam position sensor 502 is mounted on the cylinder head 202 and is adapted to output a wave-shaped signal (G2 signal) having a pulse depending on the rotational angle of the aforementioned intake cam shaft not shown (included in the intake valve control device 225) for reciprocally moving the intake valve 223. The crank position sensor 503 is mounted on the cylinder block 201 and is adapted to output a wave-shaped signal having a pulse depending on the rotational angle of the crank shaft 213.

The air flow meter 504 is provided in the intake passage 203. The air flow meter 504 is a known hot-wire type air flow meter and is adapted to output a signal corresponding to an intake temperature, which is a temperature of the intake air flowing through the intake passage 203 and output a signal corresponding to an intake air flow amount Ga, which is a mass flow per unit time of the intake air.

A engine compartment temperature sensor 505 is mounted adjacent to the engine 2 in the engine compartment 11 (refer to FIG.1). The engine compartment temperature sensor 505 is adapted to output a signal corresponding to the temperature of the air in the engine compartment 11.

The throttle position sensor 506 is disposed at the position corresponding to the throttle valve 232. The throttle position sensor 506 is adapted to output a signal corresponding to the actual rotational phase of the throttle valve 232 (that is, a throttle valve opening degree TA). The acceleration pedal opening degree sensor 507 is adapted to output a signal corresponding to a manipulation amount of an acceleration pedal 508 by a driver (acceleration manipulation amount PA).

The ECU 52, which constitutes each means of the invention, includes a CPU 521, a ROM 522, a RAM 523, a backup RAM, an interface 525 and a bidirectional bus 526. The CPU 521, the ROM 522, the RAM 523, the backup RAM 524 and the interface 525 are connected to each other by the bidirectional bus 526.

Routines (programs) performed by the CPU 521, tables (including lookup tables and maps) referred when the routines are performed, and the like are previously stored in the ROM 522. The RAM 523 is adapted to temporarily store the data, depending on the necessity, when the CPU 521 performs the routines.

The backup RAM 524 is adapted to store the data when the CPU 521 performs the routines under the condition where the backup RAM is powerd and keep the stored data after the backup RAM is powered down. In particular, the backup RAM 524 is adapted to store a part of acquired (detected or estimated) engine operation state parameters, a part of the aforementioned tables, a result of the correction (learning) of the tables and the like while being able to overwrite them.

The interface 525 is electrically connected to various operating parts of the vehicle 1 (the first motor generator 31, the second motor generator 32, the intake valve control device 225, the igniters 228, the fuel injectors 229 and the like) and the aforementioned various sensors. That is, the interface 525 is adapted to transmit the detection signals from the aforementioned various sensors to the CPU 521 and transmit the driving signals for driving the aforementioned various operating parts (these signals are generated by performing the calculation, that is, by executing the aforementioned routine on the basis of the aforementioned detection signals by the CPU 521) to the operating parts.

-Summary of the operation by the configuration of the embodiment-

According to this embodiment, the ECU 52 controls each part of the vehicle 1 (in particular, the operations of the engine 2 and the hybrid transaxle 3) such that the intermittent operation of the engine 2 can be performed while the vehicle 1 is driven. Further, the ECU 52 acquires the temperature of the engine compartment 11 on the basis of the output of the engine compartment temperature sensor 505 and controls the engine motoring execution state when the operation of the engine 2 is required to be started during the intermittent engine operation on the basis of the acquired value of the temperature of the engine compartment 11.

In particular, the ECU 52 performs the engine motoring without performing a fuel injection in the engine 2 (the fuel injectors 229) in case that the temperature of the engine compartment 11 is higher than or equal to a predetermined temperature when the operation of the engine 2 is required to be started during the intermittent engine operation. Further, the ECU 52 terminates the engine motoring and performs the fuel injection in the engine 2 in case that the temperature of the engine compartment 11 becomes lower than the aforementioned predetermined temperature after the engine motoring is started as described above. On the other hand, the ECU 52 performs the fuel injection in the engine 2 without performing the engine motoring in case that the temperature of the engine compartment 11 is lower than the aforementioned predetermined temperature when the engine operation is required to be started as described above.

That is, in the vehicle 1, while the operation of the engine 2 is stopped during the intermittent engine operation, the temperature of the engine compartment 11 may be increased by the heat radiating from the engine 2 and the like (for example, while the vehicle is stopped immediately after the vehicle has run at the high engine load, etc.). In this case, the temperature of the air in the intake passage 203 also increases.

When the operation of the engine 2 is required to be started under such a state and then, the operation of the engine 2 is started, the intake temperature when the engine operation is started, becomes high. Further, when the intake temperature becomes high, the ignition timing is corrected so as to be delayed for suppressing the knocking (for example, refer to the Unexamined JP Patent Publication No. 2010-195306). Thereby, in case that the intake temperature becomes high while the operation of the engine 2 is stopped during the intermittent engine operation, if the operation of the engine 2 is started, responding to the subsequent engine operation start requirement, the decrease of the engine output torque and the increase of the fuel consumption occur.

Therefore, according to this embodiment, in case that the intake temperature becomes high by the increase of the temperature of the engine compartment 11 while the operation of the engine 2 is stoped during the intermittent engine operation, the engine motoring is performed. Thereby, the decrease of the output torque from the engine 2 and the increase of the fuel consumption can be sufficiently suppressed.

Of course, when a period of time has elapsed after the engine motoring is started, the large part of the inside air having the high temperature is suctioned into the engine 2 and is consumed and the ambient air is introduced and therefore, the temperature of the engine compartment decreases. Thereby, the intake temperature decreases. Therefore, according to this embodiment, when the temperature of the engine compartment 11 decreases to a certain temperature, the engine motoring is terminated and the fuel injection is performed. Thereby, the start of the operation of the engine 2 is sufficiently performed during the intermittent engine operation.

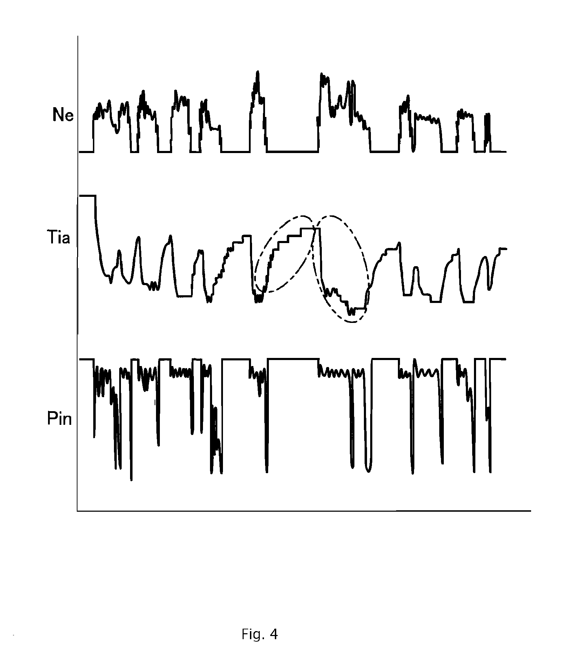

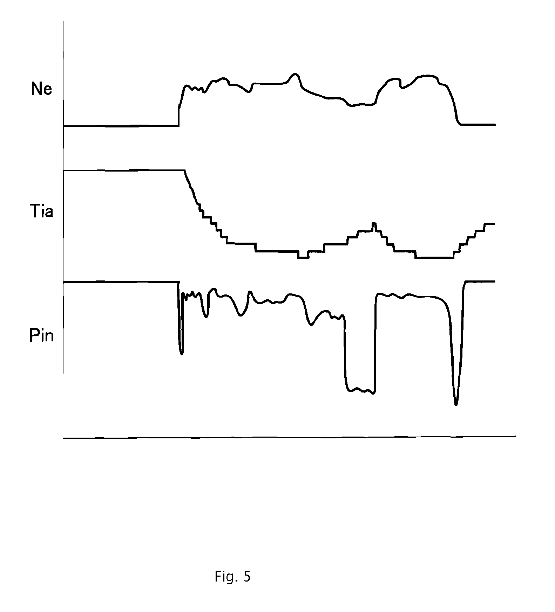

In this regard, FIGs.4 and 5 are graphs showing the time course of the engine speed Ne, the intake temperature Tia and the intake pipe negative pressure Pin. It should be noted that FIG.5 shows a portion of the FIG.4 enlarged along the time axis. As shown in a portion of FIG.4 enclosed by the chain dashed line, while the operation of the engine 2 is stopped during the intermittent engine operation, the intake temperature is increased by the increase of the temperature of the engine compartment 11. Thereafter, as shown in a portion of FIG.4 enclosed by the chain double-dashed line, the intake temperature decreases as the air having the high temperature is consumed.

As described above, the intake temperature changes by the influence of the air, which flows into or out of the engine compartment 11 and the intake passage 203. On the other hand, the correlation between the change of the intake temperature and the change of the intake pressure is small (in particular, refer to FIG.5). Thus, the intake temperature cannot be accurately estimated due to the intake pressure and the change thereof while the operation of the engine 2 is stopped during the intermittent engine operation. Therefore, according to this embodiment, the judgment of the performing of the engine motoring is executed on the basis of the intake temperature Tia detected by the air flow meter 504 or the temperature Tec of the engine compartment 11 detected by the engine compartment temperature sensor 505.

-Concrete example of the operation-

FIG.4 is a flowchart showing the control performed according to this embodiment. It should be noted that in this flowchart, the "step" is abbreviated as "S".

First, at the step 410, it is judged if the present engine operation state is the intermittent engine operation mode (that is, if a predetermined intermittent engine operation permission condition is satisfied). In case that the present engine operation state is the intermittent engine operation mode (Step 410 = Yes), the process proceeds to the step 420.

At the step 420, it is judged if the stop of the operation of the engine 2 in the intermittent engine operation mode is performed at present. In case that the stop of the operation of the engine 2 in the intermittent engine operation mode is performed (Step 420 = Yes), the process proceeds to the step 430.

At the step 430, it is judged if the operation of the engine 2 has been required to be started while the operation of the engine 2 is stopped in the intermittent engine operation mode. In case that the operation of the engine 2 has been required to be started while the operation of the engine 2 is stopped in the intermittent engine operation mode (Step 430 = Yes), the process proceeds to the step 440.

At the step 440, it is judged if the judging temperature Tin is higher than or equal to a predetermined temperature Tin0 (the engine motoring starting judgment temperature). In this regard, according to this concrete example, as the judging temperature Tin, the temperature Tec of the engine compartment 11 based on the output of the engine compartment temperature sensor 505 is used.

In case that the judging temperature Tin is higher than or equal to the predetermined temperature Tin0 (Step 440 = Yes), the process proceeds to the steps 450 and 460 and thereafter, the process proceeds to the step 470. On the other hand, in case that the judging temperature Tin is lower than the predetermined temperature Tin0 (Step 470 = No), the processes of the steps 450 and 460 are skipped and the process proceeds to the step 470.

That is, in case that the temperature of the engine compartment 11 is high (Step 440 = Yes), the engine motoring is performed in the engine 2 (Step 450 : at this time, the fuel injection is stopped). Thereafter, it is judged if the judging temperature Tin becomes lower than a predetermined temperature Tin1 (the engine motoring terminating judgment temperature) (Step 460).

When the judging temperature Tin becomes lower than the predetermined temperature Tin1 (Step 460 = Yes), the process proceeds to the step 470 and the engine motoring is terminated and the operation of the engine 2 is started (that is, the fuel injection by the fuel injector 229 is performed). In this regard, according to this concrete example, in consideration of the stability of the control, the predetermined temperature Tin1 of the step 460 is set as a temperature slightly lower than the predetermined temperature Tin0 of the step 440 (for example, by several tens of degrees C).

On the other hand, in case that the temperature of the engine compartment 11 is relatively low (Step 440 = No), the engine 2 is operated immediately when the engine operation is required to be started (Step 430 = Yes) (that is, the fuel injection by the fuel injector 229 is performed).

-Modified example-

It should be noted that the aforementioned embodiment is one for simply illustrating a typical embodiment of the invention, which is deemed to be most appropriate at the filing of this application by the applicant as described above. Thus, the invention is not limited to the aforementioned embodiment. Therefore, it is natural that various modification can be applied to the aforementioned embodiment without changing the essential portion of the invention.

Below, several typical modified examples will be illustrated. Of course, the modified example is not limited to the examples described below. Further, a plurality of the modified examples can be suitably combined as far as no technical inconsistency occurs.

The invention (in particular, the operationally or functionally described invention relating to each element which constitutes means of the invention for solving the problem) should not be narrowly interpreted on the basis of the descriptions of the aforementioned embodiment and the modified examples described below. Such a narrow interpretation is not allowed since it unjustly harms the interest of the applicant (who intends to file a patent application as early as possible under the first-to-file principle and it unjustly provides the imitator with an interest.

The invention is not limited to the concrete device configuration disclosed in the aforementioned embodiment. For example, the invention can be applied to the gasoline engine, the diesel engine, the methanol engine, the bioethanol engine and any other type engine. Also, the number of the cylinders, the type of the cylinder arrangement (the straight type, the V type, the horizontally-opposed type), the type of the fuel supply and the type of the ignition are not limited.

Direct fuel injectors for injecting the fuel directly into the combustion chambers CC may be provided in addition to or in place of the fuel injectors 229 for injecting the fuel into the intake ports 221 (for example, refer to Unexamined JP Patent Publication No. 2007-278137, etc.). The invention can be appropriately applied to such a configuration.

The invention is not limited to the concrete aspect of the processes disclosed in the aforementioned embodiment. For example, an engine operation state parameter acquired (detected) by a certain sensor can be replaced with the other engine operation state parameter acquired (detected) by the other sensor or the value estimated on-board by using the parameter.

That is, for example, as the temperature Tin used in the processes of the aforementioned concrete example, in place of the temperature Tec of the engine compartment 11 base on the output of the engine compartment temperature sensor 505, the temperature of the engine compartment 11 estimated or calculated on the basis of the intake temperature Tia detected by the air flow meter 504 can be used. In this case, the engine compartment temperature sensor 505 can be omitted.

Otherwise, as the temperature Tin used in the processes of the aforementioned concrete example, the intake temperature Tia detected by the air flow meter 504 or a value Tca obtained by correcting the temperature Tia by the temperature Tec of the engine compartment 11 based on the output of the engine compartment temperature sensor 505, can be used.

$$Tca = K * Tia$$

$$K = MapK(Tec)$$

(This map of the correction coefficient K may be previously obtained by an experiment or a computation simulation and may be stored in the ROM 522 or the backup RAM 524.)

The "Tin1" in the process of the step 460 of FIG.4 may be equal to the "Tin0". Otherwise, the process of the step 460 of FIG.4 can be replaced with the judgment if the integration value of the amounts of the intake air of all cylinder acquired on the basis of the output of the air flow meter 504 after the engine motoring is started exceeds a predetermined value (for example, 70 grams). Otherwise, the process of the step 460 of FIG.4 can be replaced with the judgment if the engine motoring duration time from the start of the engine motoring at this time exceeds a predetermined upper limit time (for example, 5 seconds).

It is natural that the other modified example which is not referred herein is involved within the scope of the invention as far as the essential portion of the invention is not changed. Further, the operationally or functionally described element of each element which constitutes means of the invention for solving the problem involves the concrete configuration disclosed in the aforementioned embodiment and the modified examples as well as any configuration which can realize the operation or the function thereof. Furthermore, the contents of the Patent Publications (including the specification and the drawings) referred in this specification can be incorporated herein as a part of this specification.

**Claims**

1. A hybrid vehicle control device for controlling a hybrid vehicle, having an internal combustion engine positioned in an engine compartment and an electric motor which can perform a motoring of the engine, so as to intermittently operate the engine while the hybrid vehicle is driven,
   the device comprising:

   temperature acquisition means for acquiring a temperature of the engine compartment; and
   engine motoring control means for performing the engine motoring without performing a fuel injection in the engine in case that the temperature acquired by the temperature acquisition means is higher than or equal to a predetermined temperature when the engine operation is required to be started during the intermittent engine operation.

2. The device as set forth in claim 1, wherein the engine motoring control means terminates the engine motoring and performs the fuel injection in the engine in case that since the temperature is higher than or equal to the predetermined temperature when the engine operation is required to be started, the engine motoring is started and thereafter, the temperature becomes lower than the predetermined temperature.

3. A hybrid vehicle control device for controlling a hybrid vehicle, having an internal combustion engine positioned in an engine compartment and an electric motor which can perform a motoring the engine, so as to intermittently operate the engine while the hybrid vehicle is driven,
   the device comprising:

   temperature acquisition means for acquiring an intake temperature of the engine; and
   engine motoring control means for performing the engine motoring without performing a fuel injection in the engine in case that the intake temperature acquired by the temperature acquisition means is higher than or equal to a predetermined temperature when the engine operation is required to be started during the intermittent engine operation.

4. The device as set forth in claim 3, wherein the engine motoring control means terminates the engine motoring and performs the fuel injection in the engine in case that since the intake temperature is higher than or equal to the predetermined temperature when the engine operation is required to be started, the engine motoring is started and thereafter, the intake temperature becomes lower than the predetermined temperature.

Fig. 1

Fig. 2

Fig. 3

Fig. 4

Fig. 5

START

S410
INTERMITTENT ENGINE
OPERATION ?
No

Yes
S420
ENGINE OPERATION
STOPPED ?
No

Yes
S430
ENGINE OPERATION START
REQUIRED ?
No

Yes
S440
Tin ≧ Tin0 ?
No

Yes
PERFORMING ENGINE
MOTORING (F/C)
S450

S460
Tin < Tin1 ?
No

Yes
STARTING ENGINE
OPERATION (FUEL
INJECTION)
S470

END

Fig. 6

## INTERNATIONAL SEARCH REPORT

| International application No. |
| --- |
| PCT/JP2012/051761 |

A.  CLASSIFICATION OF SUBJECT MATTER
*B60W10/06*(2006.01)i, *B60K6/445*(2007.10)i, *B60W10/08*(2006.01)i, *B60W20/00*
(2006.01)i, *F02D29/02*(2006.01)i

According to International Patent Classification (IPC) or to both national classification and IPC

B.  FIELDS SEARCHED

Minimum documentation searched (classification system followed by classification symbols)
B60W10/06, B60K6/445, B60W10/08, B60W20/00, F02D29/02

Documentation searched other than minimum documentation to the extent that such documents are included in the fields searched
    Jitsuyo Shinan Koho       1922–1996   Jitsuyo Shinan Toroku Koho   1996–2012
    Kokai Jitsuyo Shinan Koho   1971–2012   Toroku Jitsuyo Shinan Koho   1994–2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2010-038147 A  (Toyota Motor Corp.),<br>18 February 2010 (18.02.2010),<br>claims 27 to 29; paragraphs [0271] to [0288];<br>fig. 17<br>(Family: none) | 3,4<br>1,2 |
| Y | JP 2011-043089 A  (Toyota Motor Corp.),<br>03 March 2011 (03.03.2011),<br>paragraph [0054]<br>(Family: none) | 1,2 |
| A | JP 2010-127178 A  (Nissan Motor Co., Ltd.),<br>10 June 2010 (10.06.2010),<br>entire text; all drawings<br>(Family: none) | 1-4 |

| ☒ | Further documents are listed in the continuation of Box C. | ☐ | See patent family annex. |

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>   09 April, 2012 (09.04.12) | Date of mailing of the international search report<br>   24 April, 2012 (24.04.12) |
| --- | --- |
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/051761

| | C (Continuation). DOCUMENTS CONSIDERED TO BE RELEVANT | |
|---|---|---|
| Category* | Citation of document, with indication, where appropriate, of the relevant passages | Relevant to claim No. |
| A | JP 2010-195306 A (Toyota Motor Corp.), 09 September 2010 (09.09.2010), entire text; all drawings (Family: none) | 1-4 |

Form PCT/ISA/210 (continuation of second sheet) (July 2009)

**EP 2 808 216 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006256481 A
- JP 2011043089 A
- JP 2010195306 A
- JP 2007278137 A